# NEUE EUROPÄISCHE PATENTSCHRIFT

(11) **EP 0 545 050 B2**
(45) Veröffentlichungstag und Bekanntmachung des Hinweises auf die Entscheidung über den Einspruch: **21.10.1998**
(45) Hinweis auf die Patenterteilung: 10.01.1996
(21) Anmeldenummer: 92117902.4
(22) Anmeldetag: 20.10.1992
(51) Int. Cl.: C09K 3/32, C02F 1/68

(54) **Verfahren zur Umweltverträglichen Entfernung von Öl und ölähnlichen Stoffen von der Wasser- oder Erdoberfläche und dazu geeigneter Öladsorber**
Process for the non-polluting removal, of petroliferons products from land or aquatic surfaces and oil-adsorbent
Méthode pour l'élimination non-polluante de produits pétrolifères de surfaces aquatiques ou terrestres et adsorbant d'huile

(30) Priorität: 06.12.1991 DE 4140247
(43) Veröffentlichungstag der Anmeldung: 09.06.1993
(73) Patentinhaber: Schiwek, Helmut, 47057 Duisburg (DE)
(72) Erfinder: Schiwek, Helmut, 47057 Duisburg (DE)
(74) Vertreter: Schulte, Jörg, Dipl.-Ing.

(56) Entgegenhaltungen:
- EP-A- 375 235
- EP-A- 0 395 468
- DE-A- 2 738 528
- FR-A- 2 138 259
- FR-A- 2 401 214
- FR-A- 2 446 289
- GB-A- 1 235 463
- US-A- 4 070 287
- Firmenschrift Orgel S.A., Rantigny, France "Absorlene", 1976

## Beschreibung

Die Erfindung betrifft ein Verfahren zur Vermeidung oder zur Behebung der Verseuchung von Wasser und Erdboden durch Öl oder ölähnliche Stoffe durch Aufbringen von hydrophobierten, anorganischen Fasern auf den gefährdeten Bereich, Anlagern des gefährdenden Öls an die Fasem und Entsorgung durch Trennung von Fasem und Öl. Die Erfindung betrifft außerdem einen Öladsorber zur Aufnahme von Öl oder ölähnlichen Stoffen von der Wasser- oder Erdoberfläche, bestehend aus anorganischen Fasern, die mit Silikon als Hydrophobierungsmittel versehen sind.

Mit immer größer werdenden Öltransportern wird auch die Gefährdung der Umwelt durch auslaufendes Öl immer größer. Im Rahmen von Ölkatastrophen der letzten Jahre sind ganze Küstenstriche stark verunreinigt und das Leben im Meer unter den gefährdeten Bereichen völlig vernichtet worden. Es hat von daher nicht an Versuchen gefehlt, das einmal ausgetretene Öl von der Wasser- oder Erdoberfläche abzupumpen bzw. es dadurch zu neutralisieren, daß verschiedene Stoffe auf das Öl oder die ölähnlichen Stoffe aufgesprüht wird. Aus der FR-PS 2 646 189 ist es bekannt, hydrophobierte Mineralfasem auf die Wasseroberfläche zu blasen, wo diese Fasern Öl oder ölähnliche Stoffe anlagern und aufnehmen sollen, damit dann das Gemisch abgehoben und entsorgt werden kann. Die Fasern, die relativ kurz ausgebildet sein sollen, werden mit einem Silikonöl hydrophobiert. Die Zugabemenge liegt bei 0,5 bis 3 %. Nach,teilig bei diesen bekannten Verfahren ist, daß die relativ kurzen Mineralfasem zum Absinken neigen, wenn sie nicht frühgenug mit dem Öl in Verbindung treten können. Damit geht ein Teil des aufgeblasenen Mineralfasermaterials verloren, bevor es überhaupt erst aktiv werden kann. Die Verseuchung bzw. Verschmutzung des Meeresgrundes oder auch des Erdbodens ist damit erheblich.

Die FR-PS 2 401 214 lehrt ebenfalls das Aufnehmen von Öl durch Mineralfasern, wobei diese Mineralfasern vorher über ein Bindemittel impregniert werden. Dieses Verfahren weist vergleichbare Nachteile, wie das aus der FR-PS 2 646 189 bekannte Verfahren auf.

Auch aus der GB-PS 1 235 463 ist ein Verfahren bekannt, bei dem das auf dem Wasser aufliegende Öl über anorganische Fasern aufgenommen werden soll, wobei die Fasern vorher mit einem wasserabstoßenden Material versehen sind. Die Fasern schwimmen auf dem Wasser und führen zum Anlagern des Öls, das dann durch Abbrennen von den Fasern wieder entfernt wird. Abgesehen davon, daß das einfache Abbrennen des von den Fasern aufgenommenen Öls volkswirtschaftlich nicht vertretbar ist, tritt allein schon durch das Verbrennen des Öls eine erhebliche Umweltbelastung auf. Darüber hinaus hat sich herausgestellt, daß es das Speichervermögen von einfach auf die Wasseroberfläche aufgesprühten oder aufgelegten anorganischen Fasern nicht ausreicht, um die nötigen Mengen an Öl kurzfristig und sicher vom Wasser abzunehmen und zwischenzulagern. Außerdem ist das Rückgewinnen der mit angelagertem Öl versehenen Fasem recht aufwendig, wobei auch hier der schon weiter vorne genannte Effekt auftritt, daß nämlich ein Teil der Fasern im Wasser absinkt oder aus anderem Grunde nicht zurückgewonnen werden kann.

Der Erfindung liegt daher die Aufgabe zugrunde, ein schnell und sicher wirkendes Verfahren zur Bekämpfung von Tankerunfällen u.ä. Problemen sowie einen geeigneten Oladsorber zu schaffen, über die eine insgesamt umweltschonende Entsorgung des ausgetretenen Öls oder der ölähnlichen Stoffe möglich wird.

Die Aufgabe wird erfindungsgemäß dadurch gelöst, daß im Hochtemperaturbereich geblasene Glaswolle mit Silikon und einer als Bindemittel dienenden Stärke (Polysacchariden) hydrophobiert und gleichzeitig gebunden wird, daß die entsprechend behandelte Glaswolle zu einem schneidfähigen, mattenförmigen Gitterwerk vor oder während einer Trocknung bei 150° C zusammengefaßt und zusammenhängend auf die belastete Wasser- oder Erdoberfläche aufgebracht und dort bis zum Vollsaugen belassen wird, woraufhin die weitgehend vollgesaugte Glaswolle aufgenommen und zwischengelagert wird, um anschließend einer mechanischen oder thermischen Trennung zugeführt zu werden.

Mit einem derartigen Verfahren ist es möglich, auch bei größeren Tankerunfällen oder sonstigen Belastungen der Umwelt ein zum Adsorbieren geeignete Glaswollematte bzw. entsprechend viele derartiger Matten kurzfristig aufzubringen, um das ausgetretene Öl oder die ölähnlichen Stoffe aufzunehmen, zu binden und dann abzutransportieren. Durch die kombinierte "Beschichtung" der einzelnen Glaswollefäden ist sichergestellt, daß die einzelnen Fäden anschließend nicht nur lose aufeinanderliegen, sondem vielmehr das vorteilhafte Gitterwerk ergeben, das eine große Menge an Öl u.ä. "Schadstoffen" aufnehmen kann. Außerdem bietet dieses Gitterwerk die Möglichkeit, die einmal aufgenommenen Stoffe auch wirklich so zu binden, daß die Matten zurückgewonnen und so lange zwischengelagert werden können, bis man mit der Endaufbereitung beginnen kann. Diese Endaufbereitung kann auf mechanischem und/oder thermischem Weg vollzogen werden, je nachdem, ob man die Glaswolle bzw. die entsprechenden Glaswollegittermatten noch einmal einsetzen will oder nicht. Durch das "Zusammenbacken" der Glaswolle bei rd. 150° C wird nicht nur der Trocknungseffekt beschleunigt, sondem es kommt auch zu einer gewissen Reaktion des Silikons-/Stärke-Gemisches mit den einzelnen Fasern. Die Stärke ermöglicht ein gewisses Zusammenfassen bzw. Zusammenkleben der einzelnen Fasern, so daß das beschriebene Gitterwerk zustande kommt, das der Matte die nötige Stabilität aber auch andererseits die Möglichkeit zum Anlagern des Öls oder der ölähnlichen Stoffe beläßt. Die entsprechende Matte stellt ein räumliches Gitterwerk dar, das über Kapillarwirkung und für die Öladsorbierung sorgt.

Ein vorteilhaftes räumliches Gitterwerk wird insbesondere dadurch erreicht, daß der Wolle 7 bis 10 % Silikon und Stärke zugemischt wird, so daß die einzelnen Glasfäden die notwendige Stabilität erhalten bzw. bewahren und vor allem auch ihre Länge, so daß das beschriebene günstige Gitterwerk gewährleistet ist.

Den ausreichenden Klebeeffekt erreicht das Gemisch aus Silikon und Stärke, wenn es im Verhältnis 94 bis 96 % Silikon zu 6 bis 4 % Stärke gemischt und dann gemeinsam der Glaswolle zugegeben wird. Es zeigt sich dabei, daß durch den ja nachfolgenden Trocknungsprozeß eine Härtung eintritt, die dem Gitterwerk die große Oberfläche beläßt, so daß entsprechende Mengen an Öl adsorbiert werden können.

Um eine möglichst gleichmäßige Beschichtung der einzelnen Glasfasern zu gewährleisten, sieht die Erfindung vor, daß vor oder beim Zusammenlegen der Fasern Silikon und Stärke auf die Fasern bzw. Faserstränge aufgesprüht werden. Damit wird praktisch jede einzelne Faser erreicht, um sie entsprechend vorbehandelt dann der weiteren Bearbeitung zuzuführen. Vorteilhaft ist darüber hinaus, daß die Fasern so besprüht werden, daß sich Tröpfchen praktisch nicht bilden können, so daß wiederum eine gleichmäßige Beschichtung der einzelnen Fasern und ein entsprechendes Zusammenlegen möglich ist. Weiter vorne ist erläutert, daß ein schneidfähiges, mattenförmiges Gitterwerk zusammengefügt werden soll, das dann optimal zur Adsorption des Öls geeignet ist. Um möglichst viel Fläche vorzugeben und auch in gewisser Hinsicht einen großen Hohlraum um die einzelnen Fasern herum, sieht die Erfindung vor, daß die besprühten Fasem aufeinandergelegt und damit kompaktiert und dann bei ungefähr 150° C zusammengebacken werden. Damit ergibt sich ein loses, aber dennoch gut zu schneidendes und ein vorteilhaftes Gitterwerk ergebendes Gebilde.

Will man eine höhere Rohdichte haben, so besteht die Möglichkeit, die Fasern nach dem Besprühen mit Silikon und Stärke unter Zwangsführung zusammenzufassen und dann zusammenzubacken, wobei diese Zwangsführung schon ausreicht, um das leichte Zusammenpressen zu erreichen.

Eine große Oberfläche einerseits und dennoch eine große Stabilität andererseits wird bei einem derartigen Gitterwerk vorgegeben, wenn als Glaswolle Weichglaswolle mit 5 bis 7 um Faserdurchmesser verwendet wird. Diese Feinglaswolle kann durch die beschriebene Vorbereitung auch so weit stabilisiert werden, daß die notwendigen Längen an Fasern erreicht und beibehalten werden, wodurch sich insgesamt gesehen das gleichmäßige und zur Aufnahme von großen Mengen an Öl geeignete Gitterwerk ergibt. Es ist überraschend, daß diese so ausgebildeten Gitterwerke eine Aufnahmekapazität von 1 : 30 aufweisen. Ein Liter der Weichglaswolle mit etwas 30 g Gewicht bindet 900 g Öl. Die entsprechend mit Öl getränkten Glaswollegittermatten können auf die unterschiedlichste Art und Weise entsorgt werden. Denkbar ist es dabei, die mit Öl oder ölähnlichen Stoffen weitgehend gesättigten Glaswollegittermatten über Pyrolyse oder direktes Ausglühen bei ungefähr 850° C wieder vom Öl zu befreien. Dabei geht das Glas in Schmelze und kann dann vorteilhaft beispielsweise zum Weg- oder Straßenbau eingesetzt werden, wobei es völlig frei von Ölrückständen ist.

Eine weitere Möglichkeit ist die, die mit Öl oder ölähnlichen Stoffen weitgehend gesättigten Glaswollegittermatten über Zentrifugieren oder Zusammenpressen vom Öl zu befreien. Diese Entsorgung hat den Vorteil, daß die Glaswollegittermatten im Prinzip erhalten werden und erneut zum Einsatz gebracht werden können. Dabei ist es unschädlich, wenn das Öl nicht zu 100 % aus den Glaswollegittermatten herausgelöst wird, sondern beispielsweise nur zu 99 %. Der weitere Vorteil ist der, daß das Öl dann in bearbeitbarer Form zur Verfügung steht, wobei es eben darauf ankommt, in welchem Stadium es sich befunden hat, als es in die Umwelt freigesetzt wurde. Beim Zentrifugieren kann dabei vorteilhaft die Schwerkraft so eingestellt werden, daß auf die Standfestigkeit der Glaswollegittermatten Rücksicht genommen wird, so daß sie anschließend auch wirklich 100 %ig verfügbar bleiben.

Dort, wo Ölverbrennungsanlagen zur Verfügung stehen, deren Feuerung häufig durch Zusatzbrennstoffe unterstützt werden muß, ist es von Vorteil, wenn die Glaswollegittermatten der Müllverbrennung zugeführt, wo sie vollständig zur Entsorgung kommen. Das Öl wird verbrannt, wobei die festen Rückstände mit den festen Rückständen der Glaswollegittermatten in die Asche gelangen, während die übrigen Reststoffe über die Rauchgase mit ausgetragen und zusammen mit diesen entsorgt werden.

Das Ausbreiten eines Ölteppichs wird vorteilhaft dadurch unterbunden, daß die Glaswollegittermatten in einen perforierten Schlauch eingeschoben und mit diesem als veränderbare Barriere auf die Wasseroberfläche aufgelegt werden. Durch die Perforation kann das Öl an die Glaswollegittermatten herankommen, so daß sich diese damit füllen können. Der Schlauch selber kann aus einem Material gefertigt werden, das für die Umwelt überhaupt nicht belastet ist bzw. das durch irgendwelche Schadstoffe nicht beeinträchtigt wird. Die Glaswollegittermatten saugen sich nach und nach voll, so daß es zu einem gewissen Absinken des Schlauches mit den Glaswollegittermatten kommt, so daß neue Zonen der Matten in Berührung mit dem Öl kommen und dieses ebenfalls aufnehmen können. Das Öl selbst sorgt aber für einen natürlichen Auftrieb, so daß der Schlauch insgesamt nicht absinkt. Ist dann der Ölbelag durch das Aufliegen weiterer Glaswollegittermatten auf die Wasseroberfläche beseitigt, kann auch der Schlauch bzw. die Schlauchbarriere wieder entfernt und entsorgt werden. Auch hier ist es denkbar, durch Zusammenpressen oder Zentrifugieren das Öl so weit auszutreiben, daß die Barriere dann anschließend wieder zum Einsatz gelangen kann. Die enorme Aufnahmekapazität der Barriere bzw. auch der aufgelegten Mattenelemente garantiert ein unverzügliches Aufreißen des geschlossenen Ölteppichs mit der Folge, daß zumindest ein Teil der notwendiger Sauerstoffzufuhr erfolgen kann. Die dann evtl. noch verbleibenden insel artigen Ölfelder gewährleisten dennoch den Erhalt des sich unter der Wasseroberfläche befindlichen Lebens jeglicher Art, so daß allein dadurch schon frühzeitig eine Schonung der Umwelt einstellt. Denkbar ist es auch, einen derartigen Öladsorber als Dauereinrichtung um Bohrinseln zu verlegen, so daß evtl. freigesetzte Teilölfelder immer aufgefangen werden, ohne daß die Gefahr besteht, daß sie über die Wasseroberfläche entkommen. Vorteilhaft ist der Einsatz derartiger Glaswollegittermatten in perforierten Schläuchen auch deshalb, weil durch das frühzeitige Aufnehmen von Öl die Explosionsgefahr verringert bzw. ganz unterbunden wird.

Öladsorber im erfindungsgemäßen Sinne hat es im Stand der Technik bisher nicht gegeben. Nach den zum Stand der Technik zu zählenden Schriften wie der FR-PS 2 646 189 werden jeweils anorganische Fasern, die hydrophobiert sind lediglich auf das Wasser gestreut ohne ihnen ein stabiles Gerüst bzw. ein Gitterwerk zu geben, das dann als Öladsorber erst zu bezeichnen ist. Um einen solchen Öladsorber vorzugeben, der nach dem erfindungsgemäßen Verfahren einsetzbar ist, sieht die Erfindung vor, daß die im Hochtemperaturbereich erzeugten Glasfasern mit einem Gemisch aus 94-96% Silikon und 6-4% Stärke (Polysacchariden) beschichtet sind, daß die Fasern zu schneidfähigen, mattenförmigen Glaswollesträngen zusammengefaßt und ausgehärtet und dann abgelängt sind. Hiermit werden räumlich ausgebildete Oladsorber geschaffen, die je nach Bemessung, d.h nach Dicke und Länge sowie Tiefe praktisch beliebig Mengen an Öl aufnehmen können. Dabei kann das durch Kapillarwirkung transportierte Öl in dem Gitterwerk auch so gespeichert werden, daß es nicht schon bei geringsten Belastungen beispielsweise beim Herausheben der Matten aus dem Wasser wieder heraustritt. Natürlich hängt die Einbindung des Öls von der Fließfähigkeit des Öls ab, doch gesagt werden, daß Öle als solche immer sicher aufgenommen werden, während Benzin u.ä. Stoffe nur immer zum Teil so weit eingebunden werden können, daß die Matten anschließend auch wieder transportiert und zwischengelagert sowie endaufbereitet werden können. Wichtig ist eben, daß das Öl so weit aufgenommen werden kann, daß es sich an den einzelnen Glasfasern mit ihren großen Oberflächen sicher anlagern kann. Dies wird durch das Gitterwerk gesichert, das erfindungsgemäß vorgegeben ist.

Insbesondere zum Einsatz in Form von Barrieren eignet sich der erfindungsgemäße Öladsorber dann besonders gut, wenn die Glaswolle Gittermatten von einem perforierten Schlauch umgeben sind Dabei wird in der Regel diese Glaswollegittermatte in den Schlauch eingeschoben. Denkbar ist es auch, den Schlauch aus entsprechender Folie und mit entsprechenden Perforationen um die einzelnen Glaswollegittermatten herumzulegen und dann zusammenzuschweißen, so daß Handarbeit weitgehend vermieden werden kann. Die Glaswollegittermatten üben auch im perforierten Schlauch ihre Funktion als Oladsorber vorteilhaft auf, wobei sie aber gleichzeitig im perforierten Schlauch vor Beeinflussungen und Beschädigungen gesichert untergebracht sind. Ausreichende Aufnahmekapazität einerseits und vorteilhafte Stabilität hat eine Glaswollegittermatte, die eine Raumdichte von 18 bis 42 Kg/m³ aufweist.

Die Adsorptionswirkung der Glaswollegittermatten ist insbesondere dadurch gegeben, daß die Glasfasern nach dem Beschichten lose aufeinandergelegt und dann bei 150° C zusammengebacken sind. Damit ist ein schnell und sicher wirkendes Gittergerüst bzw. ein räumliches Gitterwerk geschaffen, das das aufgenommene Öl auch vorteilhaft sicher speichert. Über die 150° C wird der Reaktionsvorgang des Silikons-bzw. des Stärkematerials mit der Faser beschleunigt und optmiert, so daß damit die notwendige vorteilhafte Glasfaser mit geringem Durchmesser in das Gitterwerk eingebunden werden kann.

Die Erfindung zeichnet sich insbesondere dadurch aus, daß ein Verfahren und ein Öladsorber geschaffen sind, mit denen schnell und sicher Tankerunfälle u.ä. Gefährdungen der Umwelt bekämpft werden können. Der Öladsorber, der auf die beschriebene Art und Weise hergestellt worden ist, kann als Glaswollegittermatte auf die Wasseroberfläche oder die Erdoberfläche aufgelegt werden, wobei er sich dann selbsttätig voll Öl oder ölähnliche Stoffe saugt und diese Stoffe dann so weit bindet, daß sie zusammen mit der Glaswollegittermatte dann auch transportfähig sind. Die Glaswollegittermatte wird dann entsorgt, so daß sie entweder umweltfreundlich abgelagert oder aber erneut zum Einsatz kommen kann. Überraschend ist die Schnelligkeit, mit der die Glaswollegittermatten das Öl oder die ölähnlichen Produkte aufnehmen und dann auch so sicher festhalten. daß eine einwandfreie Entfernung von den gefährdeten Bereichen möglich ist, um dann die Entsorgung an- und abzuschließen.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
Fig 1 eine Vorrichtung zur Herstellung von Glasfasern in schematischer Darstellung,
Fig. 2 eine einzelne Glasfaser im Schnitt,
Fig. 3 die Nachbehandlungsstufe des Verfahrenschemas nach Fig. 1 und
Fig 4 eine in einen Schlauch eingebettete Glaswollegittermatte.

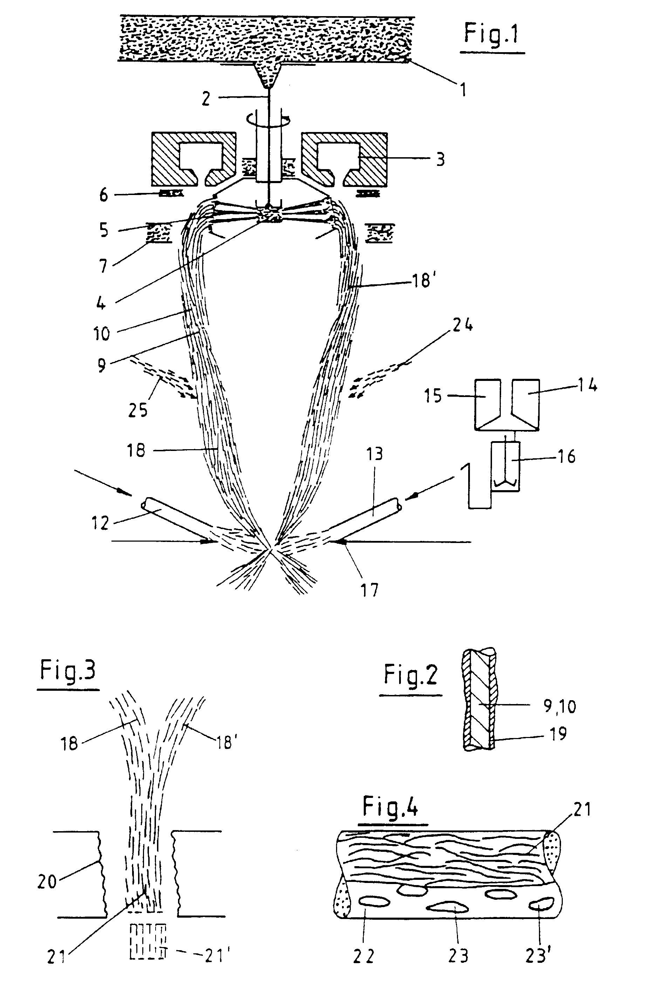

Fig. 1 zeigt zunächst einmal die Glasschmelze (1), die auf geeignete Art und Weise erhitzt worden ist. Der Glasfluß (2) tritt in dem Bereich der Brenner (3) ein, wo der sich drehende Korb (4) mit dem Spinnteil (5) für eine entsprechende Faserbildung sorgt. Mit (7) ist die Induktionsheizung bezeichnet.

Die einzelnen Glasfasern (9, 10) verlassen das Spinnteil (5) und stehen als Glaswollestrang (18) für die weitere Bearbeitung zur Verfügung.

Diese weitere Bearbeitung der Glasfasern (9, 10) bzw. des Glaswollestranges (18) erfolgt durch Aufsprühen von Silikon und Stärke, wobei diese Materialien über die Zuführungsrohre (12, 13) schon im gemischten Zustand herangebracht und dann über die Luftdüse (14) erfaßt und dann auf die Glasfaser (9, 10) aufgesprüht werden. Die Zuführungsrohre (12, 13) sind hierzu über den Mischbehälter (16) mit dem Silikonbehälter (14) und dem Stärkebehälter (15) verbunden.

Während beim Heizlufteintritt (6) eine Beeinflussung des Glasflusses (2) durch heiße Luft bewirkt wird, kann die Luftdüse (17) mit Normalluft beaufschlagt werden.

Fig. 2 zeigt eine einzelne Glasfaser (9, 10), die mit einer Beschichtung (19) aus Silikon und Stärke versehen ist. Zur Verdeutlichung ist hier die Beschichtung (19) überproportional wiedergegeben.

In Fig. 1 ist angedeutet, daß die beiden Glaswollestränge (18, 18') ineinandergeführt und dabei zusammengelegt werden, während nach Fig. 3 die beiden Glaswollestränge (18, 18') einfach zusammengelegt werden, was ausreicht, um die Fasem bzw. das daraus entstehende Gitterwerk durch entsprechende Bindungswirkung zu stabilisieren. Diese Bindung erfolgt ja beim erfindungsgemäßen Verfahren durch Zuführen von Stärke, während das Silikon die einzelnen Glasfasern (9, 10) hydrophobieren soll.

Bei der aus Fig. 3 ersichtlichen Ausführung der Erfindung erfolgt der Trocknungsprozeß bei rd. 150° C über die Ofenheizung (20). Es sind aber auch andere Möglichkeiten gegeben, um die dann entstehende Glaswollegittermatte (21) entsprechend durch Wärme zu optimieren.

Fig. 4 zeigt den Ausschnitt eines Schlauches (22), in dem Glaswollegittermatten (21) untergebracht sind. Der Schlauch (22) ist mit einer Vielzahl über die Länge und den Umfang verteilt angeordneten Lochung versehen, um auf diese Art und Weise den Durchtritt des Öls oder der ölähnlichen Stoffe durch den Schlauch (22) zu ermöglichen, wobei dann die Glaswollegittermatten (21) ihre Adsorptionswirkung voll entfalten können.

Während nach der o.g. Schilderung lediglich an einer Stelle Adsorptions- und Bindemittel zugeführt wird, ist es auch denkbar, an weiteren Mischstellen (24, 25) entweder Silikon oder Stärke oder aber auch ein Gemisch auf die Glaswollestränge (18) aufzusprühen, so daß durch die zweite Besprüherei dann im Bereich der Zuführungsrohre (12, 13) der jeweiligen Glaswollegittermatte den letzten Schliff zu geben.

Alle genannten Merkmale, auch die den Zeichnungen allein zu entnehmenden, werden allein und in Kombination als erfindungswesentlich angesehen.

## Patentansprüche

1. Verfahren zur Vermeidung oder der Behebung der Verseuchung von Wasser und Erdboden durch Öl oder ölähnliche Stoffe durch Aufbringung von hydrophobierten, anorganischen Fasern auf den gefährdeten Bereich, Anlagern des gefährdenden Öls an die Fasern und Entsorgung durch Trennung von Fasern und Öl,
**dadurch gekennzeichnet,** daß im Hochtemperaturbereich geblasene Glaswolle mit Silikon und einer als Bindemittel dienenden Stärke (Polysacchariden) hydrophobiert und gleichzeitig gebunden wird, daß die entsprechend behandelte Glaswolle zu einem schneidfähigen, mattenförmigen Gitterwerk vor oder während einer Trocknung bei 150° C zusammengefaßt und zusammenhängend auf die belastete Wasser- oder Erdoberfläche aufgebracht und dort bis zum Vollsaugen belassen wird, woraufhin die weitgehend vollgesaugte Glaswolle aufgenommen und zwischengelagert wird, um anschließend einer mechanischen oder thermischen Trennung zugeführt zu werden.

2. Verfahren nach Anspruch 1,
**dadurch gekennzeichnet,**
daß der Glaswolle 7 bis 10 % Silikon und Stärke zugemischt wird.

3. Verfahren nach Anspruch 1,
**dadurch gekennzeichnet,**
daß Silikon und Stärke im Verhältnis 94 bis 96 % Silikon zu 6 bis 4 % Stärke gemischt und dann gemeinsam der Glaswolle zugemischt werden.

4. Verfahren nach Anspruch 1 und Anspruch 2,
**dadurch gekennzeichnet,**
daß vor und beim Zusammenlegen der Fasern Silikon und Stärke auf die Fasern bzw. die Faserstränge aufgesprüht werden.

5. Verfahren nach Anspruch 1 und Anspruch 4,
**dadurch gekennzeichnet,**
daß die besprühten Fasern aufeinandergelegt und damit kompaktiert und dann bei rd. 150° C zusammengebacken werden.

6. Verfahren nach Anspruch 1,
**dadurch gekennzeichnet,**
daß die Fasern nach dem Besprühen mit Silikon und Stärke unter Zwangsführung zusammengefaßt und dann zusammengebacken werden.

7. Verfahren nach Anspruch 1,
**dadurch gekennzeichnet,**
daß als Glaswolle Weichglaswolle mit 5 bis 7 um Faserdurchmesser verwendet wird.

8. Verfahren nach Anspruch 1,
**dadurch gekennzeichnet,**
daß die mit Öl oder ölähnlichen Stoffen weitgehend gesättigten Glaswollegittermatten über Pyrolyse oder direktes Ausglühen bei 850° C wieder vom Ol befreit werden.

9. Verfahren nach Anspruch 1,
**dadurch gekennzeichnet,**
daß die mit Öl oder ölähnlichen Stoffen weitgehend gesättigten Glaswollegittermatten über Zentrifugieren oder Zusammenpressen vom Öl befreit werden.

10. Verfahren nach Anspruch 1,
**dadurch gekennzeichnet,**
daß die Glaswollegittermatten der Müllverbrennung zugeführt werden.

11. Verfahren nach Anspruch 1,
**dadurch gekennzeichnet,**
daß die Glaswollegittermatten in einen perforierten Schlauch eingeschoben und mit diesem als veränderbare Barriere auf die Wasseroberfläche aufgelegt werden.

12. Öladsorber zur Aufnahme von Öl oder ölähnlichen Stoffen von der Wasser- oder Erdoberfläche, bestehend aus anorganischen Fasern, die mit Silikon als Hydrophobierungsmittel versehen sind,
**dadurch gekennzeichnet,**
daß die im Hochtemperaturbereich erzeugten Glasfasern (9, 10) mit einem Gemisch aus 94 - 96% Silikon und 6 - 4% Stärke (Polysacchariden) (19) beschichtet sind, daß die Fasern zu schneidfähigen, mattenförmigen Glaswollesträngen (18) zusammengefaßt und ausgehärtet und dann abgelängt sind.

13. Öladsorber nach Anspruch 12,
**dadurch gekennzeichnet,**
daß die Glaswollegittermatten (21) von einem perforierten Schlauch (22) umgeben sind.

14. Oladsorber nach Anspruch 12,
**dadurch gekennzeichnet,**
daß die Glaswollegittermatten (21) eine Raumdichte von 18 bis 42 Kg/m³ aufweisen.

15. Öladsorber nach Anspruch 12,
**dadurch gekennzeichnet,**
daß die Glasfasern (9, 10) nach dem Beschichten lose aufeinandergelegt und dann bei 150° C zusammengebacken sind.

## Claims

1. Process for the prevention of water and soil contamination by oil or substances similar to oil or for the decontamination thereof by applying hydrophobed, inorganic fibres to the area at risk, adding the damaging oil to the fibres and disposing thereof by separating the fibres and oil
**characterised in that**
in the high temperature range blown glass wool is hydrophobed and simultaneously bound with silicone and a starch serving as a binding agent (polysaccharides), the accordingly treated glass wool is combined to form a cuttable, mat-like lattice before or during drying at 150 ° and as a coherent unit is applied to the contaminated water or soil surface and left until soaked through, after which the extensively soaked glass wool is collected and stored temporarily to be subsequently conveyed to a mechanical or thermic separation unit.

2. Process according to claim 1,
**characterised in that**
7 to 10% silicone and starch are mixed with the glass wool.

3. Process according to claim 1
**characterised in that**
silicone and starch are mixed in a ratio of 94 to 96 % silicone to 6 to 4 % starch and are then mixed together with the glass wool.

4. Process according to claim 1 and claim 2,
**characterised in that**
before and during the collection of the fibres silicone and starch are sprayed
onto the fibres or the fibre strands

5. Process according to claim 1 and claim 4
**characterised in that**
the sprayed fibres are piled on top of one another and compacted and then baked together at about 150° C.

6. Process according to claim 1
**characterised in that**
the fibres after being sprayed with silicone and starch are collected by forced guidance and then baked together.

7. Process according to claim 1
**characterised in that**
soft glass wool with a fibre diameter of 5 to 7 µm is used as the glass wool.

8. Process according to claim 1,
**characterised in that**
the glass wool lattice extensively saturated with oil or substances similar to oil are separated from the oil by pyrolysis or direct heating at 850 °C.

9. Process according to claim 1
**characterised in that**
the glass wool lattices extensively saturated with oil or substances similar to oil are separated from the oil by centrifuge or pressing.

10. Process according to claim 1
**characterised in that**
the glass wool lattices are fed into the waste incinerator.

11. Process according to claim 1
**characterised in that**
the glass wool lattices are inserted into a perforated tube and with the latter are placed on the water surface as a movable barrier.

12. Oil adsorber for extracting oil or substances similar to oil from the water or soil surface comprising inorganic fibres containing silicone as hydrophobing agents,
**characterised in that**
the glass fibres (9, 10) produced in the high temperature range are coated with a mixture of 94-96% silicone and 6-4% starch (polysaccharides) (19), the fibres are collected and hardened to form cuttable, mat-like glass wool strands (18) and then cut to length.

13. Oil adsorber according to claim 12
**characterised in that**
the glass wool lattices (21) are enclosed by a perforated tube (22).

14. Oil adsorber according to claim 12
**characterised in that**
the glass wool lattices (21) have a density of 18 to 42 kg/m³.

15. Oil adsorber according to claim 12
**characterised in that**
the glass fibres (9, 10) are laid on top of each other loosely after coating and then baked together at 150°.

## Revendications

1. Procédé pour éviter ou éliminer la contamination de l'eau ou du sol par du pétrole ou par des matières analogues au pétrole, dans lequel on amène des fibres minérales rendues hydrophobes sur la région exposée, on fixe le pétrole polluant sur les fibres et on réalise l'élimination en séparant les fibres et le pétrole, caractérisé en ce que de la laine de verre soufflée à haute température est rendue hydrophobe et liée simultanément au moyen de silicone et d'une fécule (polysaccharides) servant de liant, en ce que la laine de verre ainsi traitée est rassemblée en un treillis en forme de mat découpable avant ou pendant un séchage vers 150°C, et disposée de façon continue sur la surface chargée de l'eau ou du sol, et y est laissée jusqu'à imbibition complète, après quoi la laine de verre largement imbibée est enlevée et stockée, pour ensuite être soumise à un traitement de séparation mécanique ou thermique.

2. Procédé suivant la revendication 1, caractérisé en ce que l'on mélange à la laine de verre 7 à 10% de silicone et de fécule.

3. Procédé suivant la revendication 1, caractérisé en ce que le silicone et la fécule sont mélangés dans un rapport de 94 à 96% de silicone et 6 à 4% de fécule, puis sont mélangés ensemble à la laine de verre.

4. Procédé suivant la revendication 1 et la revendication 2, caractérisé en ce que, avant et pendant le rassemblement des fibres, le silicone et la fécule sont aspergés sur les fibres ou sur les écheveaux de fibre.

5. Procédé suivant la revendication 1 et la revendication 4, caractérisé en ce que les fibres aspergées sont superposées et ainsi compactées, puis agglomérées vers 150°C.

6. Procédé suivant la revendication 1, caractérisé en ce que, après avoir été aspergées de silicone et de fécule, les fibres sont rassemblées avec guidage forcé puis sont agglomérées.

7. Procédé suivant la revendication 1, caractérisé en ce qu'on utilise comme laine de verre de la laine de verre molle avec un diamètre de fibres de 5 à 7 µm.

8. Procédé suivant la revendication 1, caractérisé en ce que l'on débarrasse de nouveau du pétrole les mats de laine de verre largement imbibés de pétrole ou de matières analogues au pétrole par pyrolyse ou par cuisson directe vers 850°C.

9. Procédé suivant la revendication 1, caractérisé en ce que l'on débarrasse du pétrole les mats de laine de verre largement imbibés de pétrole ou de matières analogues au pétrole par centrifugation ou compression.

10. Procédé suivant la revendication 1, caractérisé en ce que les mats de fibre de verre sont conduits à une installation d'incinération d'ordures ménagères.

11. Procédé suivant la revendication 1, caractérisé en ce que les mats de laine de verre sont introduits dans un tuyau perforé et disposés sur la surface de l'eau avec ce tuyau en tant que barrière modifiable.

12. Adsorbeur de pétrole pour retirer du pétrole ou des matières analogues au pétrole de la surface de l'eau ou du sol, constitué de fibres minérales muni de silicone en tant qu'agent hydrophobe, caractérisé en ce que les fibres de verre (9, 10) produites à haute température sont revêtues d'un mélange de 94-96% silicone et de 6-4% fécule (polysaccharides) (19), et en ce que les fibres sont rassemblées en écheveaux (18) de laine de verre en forme de mats découpables et sont durcies puis mises à longueur.

13. Adsorbeur de pétrole suivant la revendication 12, caractérisé en que les mats de laine de verre (21) sont entourés par un tuyau perforé (22).

14. Adsorbeur de pétrole suivant la revendication 12, caractérisé en ce que les mats de laine de verre (21) ont une densité de 18 à 42 kg/m³.

15. Adsorbeur de pétrole suivant la revendication 12, caractérisé en ce que les fibres de verre (9, 10), après avoir été revêtues, sont superposées librement puis agglomérées vers 150°C.
